# EUROPEAN PATENT APPLICATION

(11) **EP 4 512 539 A1**
(43) Date of publication of application: **26.02.2025**
(21) Application number: 23791861.0
(22) Date of filing: 18.04.2023
(51) Int. Cl.: B05D 5/00, B05D 7/24, C09D 5/16, C09D 183/04, C09D 183/08, C09D 7/61, C09D 7/63, C09D 7/65

(54) **ANTIFOULING COATING COMPOSITION**

(30) Priority: 22.04.2022 JP 2022070900
(71) Applicant: Chugoku Marine Paints, Ltd., Hiroshima 739-0652 (JP)
(72) Inventor: TANINO, Soichiro, Otake-shi, Hiroshima 739-0652 (JP); AOI, Atsushi, Otake-shi, Hiroshima 739-0652 (JP)
(74) Representative: Hoffmann Eitle
(86) International application number: PCT/JP2023/015495
(87) International publication number: WO 2023/204213

(57) **Abstract**

A problem to be solved by the present invention is to provide an antifouling coating composition that has a high antifouling capability against aquatic organisms while being excellent in safety and environmental responsiveness, and to provide an antifouling coating film using the antifouling coating composition, a substrate having an antifouling coating film that is the antifouling coating film and a method for producing the same, and an antifouling method using the antifouling coating film. An antifouling coating composition containing a curable organopolysiloxane (A) and a glycerin condensate ester (B) represented by the following formula (1): 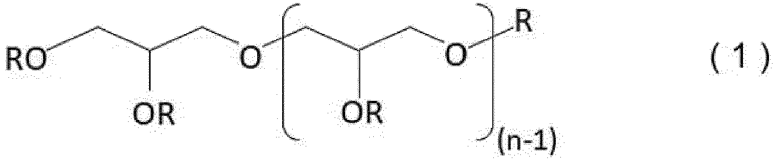 in the formula (1), n represents an integer of 2 or more and 20 or less, and R each independently represent a hydrogen atom or R¹C(=O)-, provided that at least one of R represents R¹C(=O)-, in which R¹ represents a monovalent hydrocarbon group having 7 or more and 23 or less carbon atoms.

## Description

### Technical Field

The present invention relates to an antifouling coating composition, an antifouling coating film, an antifouling sheet, a substrate having an antifouling coating film and a method of producing the same, and an antifouling method.

### Background Art

Underwater structures, such as a bottom of a vessel, are demanded to have an antifouling capability against aquatic organisms for avoiding economic losses including increase of propulsion resistance and damages due to corrosion caused by the adhesion of aquatic organisms. The antifouling method that is being most frequently used currently is a method of using an antifouling coating film formed by coating an antifouling coating composition.

Examples of the antifouling coating composition include a silicone based antifouling coating composition containing silicone rubber as a major coating film forming component exhibiting an antifouling function through the characteristics thereof including the low surface free energy and the elasticity of the coating film, which has advantages in safety and environmental responsiveness.

**PTL** 1 intends to provide an underwater antifouling tube that has an excellent antifouling capability even under condition with high biofouling load in water and also is excellent in damage resistance, an underwater cable, and a method of protecting an underwater cable with the underwater antifouling tube, and describes an underwater antifouling tube including a substrate layer containing silicone as a major component, and an antifouling layer containing a silicone cured material (A) and a lubricant (B) on the substrate layer, in which the antifouling layer constitutes the outermost layer.

### Citation List

### Patent Literature

PTL 1: JP 2021-028166 A

### Summary of Invention

### Technical Problem

The silicone based antifouling coating composition has a tendency of shortening particularly in the antifouling capability against films of secretions of aquatic organisms, which may be called slime or the like, and for compensating the tendency, a lubricant, such as a silicone oil or a paraffin oil, that oozes out to the surface of the antifouling coating film at an appropriate rate may be blended therein in some cases as described in PTL 1.

However, an agent that is better in safety and environmental responsiveness than the lubricant is demanded in the field of fisheries industries and the like, but there is a problem that such a material often has a low antifouling effect.

A problem to be solved by the present invention is to provide an antifouling coating composition that has a high antifouling capability against aquatic organisms while being excellent in safety and environmental responsiveness. Another problem to be solved by the present invention is to provide an antifouling coating film using the antifouling coating composition, an antifouling sheet, a substrate having an antifouling coating film that is the antifouling coating film and a method for producing the same, and an antifouling method using the antifouling coating film.

### Solution to Problem

The present inventors have made earnest investigations in view of the problems, and have found that the problems can be solved by an antifouling coating composition containing a curable organopolysiloxane (A) and a particular glycerin condensate ester (B), and thus the present invention has been completed.

The substance of the present invention is as follows.

The present invention relates to the following items [1] to [16].
[1] An antifouling coating composition containing a curable organopolysiloxane (A) and a glycerin condensate ester (B) represented by the following formula (1): 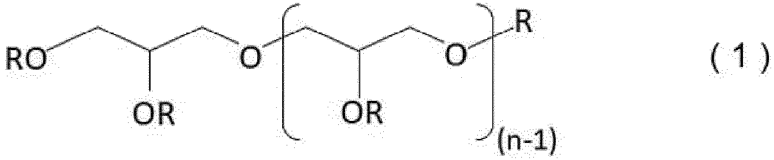 in the formula (1), n represents an integer of 2 or more and 20 or less, and R each independently represent a hydrogen atom or R¹C(=O)-, provided that at least one of R represents R¹C(=O)-, in which R¹ represents a monovalent hydrocarbon group having 7 or more and 23 or less carbon atoms.
[2] The antifouling coating composition according to the item [1], in which R¹ includes a branched hydrocarbon group.
[3] The antifouling coating composition according to the item [1] or [2], in which R includes an isostearoyl group.
[4] The antifouling coating composition according to any one of the items [1] to 3], in which at least one of R represents a hydrogen atom.
[5] The antifouling coating composition according to any one of the items [1] to [4], in which the antifouling coating composition has a content of the glycerin condensate ester (B) in a solid content thereof of 1% by mass or more and 20% by mass or less.
[6] The antifouling coating composition according to any one of the items [1] to [5], in which the curable organopolysiloxane (A) is a compound represented by the following formula (A1): 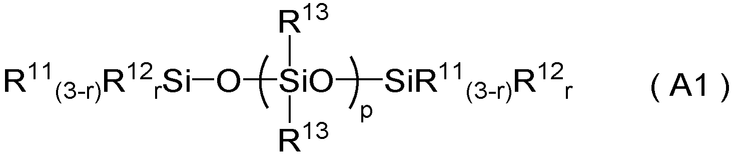 in the formula (A1), R¹¹ and R¹³ each independently represent a hydrogen atom, or any of an alkyl group, an alkenyl group, an aryl group, an aralkyl group, and a halogenated alkyl group, each having 1 to 16 carbon atoms, R¹² each independently represent a hydroxy group or a hydrolyzable group, r represents an integer of 1 to 3, and p represents a number of 10 to 10,000.
[7] The antifouling coating composition according to any one of the items [1] to [6], in which the antifouling coating composition has a content of the curable organopolysiloxane (A) in a solid content thereof of 50% by mass or more and 99% by mass or less.
[8] The antifouling coating composition according to any one of the items [1] to [7], in which the antifouling coating composition further contains an inorganic filler (C).
[9] The antifouling coating composition according to the item [8], in which the inorganic filler (C) is silica, and the silica is blended in the form of a kneaded material with the curable organopolysiloxane (A).
[10] The antifouling coating composition according to any one of the items [1] to [9], in which the antifouling coating composition further contains a silane coupling agent (D).
[11] The antifouling coating composition according to any one of the items [1] to [10], in which the antifouling coating composition further contains one or more kinds selected from the group consisting of a silicone oil (E) and an acrylic based polymer (F) having a hydrophilic group.
[12] An antifouling coating film containing the antifouling coating composition according to any one of the items [1] to [11] having been cured.
[13] An antifouling sheet including the antifouling coating film according to the item [12].
[14] A substrate having an antifouling coating film, including a substrate having thereon the antifouling coating film according to the item [12] or the antifouling sheet according to the item [13].
[15] The substrate having an antifouling coating film according to the item [14], in which the substrate is selected from a vessel, an underwater structure, and a fishery material.
[16] A method for producing a substrate having an antifouling coating film, including a step (1) of coating, or impregnating a substrate with the antifouling coating composition according to any one of the items [1] to [11], so as to provide a coated article or an impregnated article, and a step (2) of curing the coated article or the impregnated article.
[17] An antifouling method including using the antifouling coating film according to the item [12] or the antifouling sheet according to the item [13].

### Advantageous Effects of Invention

The present invention can provide an antifouling coating composition that has a high antifouling capability against aquatic organisms while being excellent in safety and environmental responsiveness. The present invention can also provide an antifouling coating film using the antifouling coating composition, an antifouling sheet, a substrate having an antifouling coating film that is the antifouling coating film and a method of producing the same, and an antifouling method using the antifouling coating film.

### Description of Embodiments

The antifouling coating composition, the antifouling coating film, the antifouling sheet, the substrate having an antifouling coating film and the method of producing the same, and the antifouling method of the present invention will be described in detail below.

### [Antifouling Coating Composition]

The antifouling coating composition according to the present embodiment (which may be hereinafter referred simply to as a "coating composition") contains a curable organopolysiloxane (A) and a glycerin condensate ester (B) represented by the following formula (1). 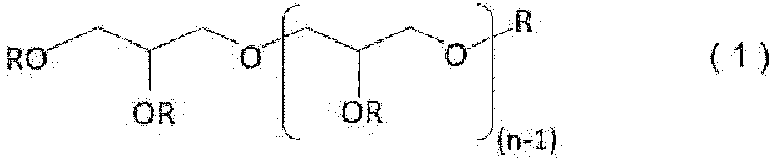 In the formula (1), n represents an integer of 2 or more and 20 or less, and R each independently represent a hydrogen atom or R¹C(=O)-, provided that at least one of R represents R¹C(=O)-, in which R¹ represents a monovalent hydrocarbon group having 7 or more and 23 or less carbon atoms.

The present invention can provide an antifouling coating composition that has a high antifouling capability against aquatic organisms while being excellent in safety and environmental responsiveness. The detailed mechanism by which the aforementioned effects are achieved is not clear, but a part thereof is considered as follows.

A silicone based antifouling coating composition does not have a coating film renewal property, and therefore the coating film thereof is prevented from being dissolved in water, resulting in excellent safety and environmental responsiveness. In the present invention, furthermore, it is considered that the antifouling coating composition according to the present embodiment provides an antifouling coating film that is excellent in static antifouling capability and dynamic antifouling capability by the particular glycerin condensate ester (B) contained as a surface modifier.

The ingredients used in the antifouling coating composition will be described in detail below.

### <Curable Organopolysiloxane (A)>

The coating composition of the present embodiment contains a curable organopolysiloxane (A) for the purpose of enhancing the antifouling capability of the antifouling coating film.

Examples of the curable organopolysiloxane (A) used in the present embodiment include a compound having a main chain having a polyorganosiloxane structure and a reactive group, in which the reactive groups are reacted with each other, or the reactive group is reacted with the reactive group of the organosilicon crosslinking agent (H) described later, so as to cure through the formation of a three-dimensional crosslinked structure. The reactive group may also be reacted with the silane coupling agent described later.

Examples of the structure of the polyorganosiloxane structure include a polydimethylsiloxane structure and a polymethylphenylsiloxane structure, in which a polydimethylsiloxane structure is preferred, and an alkylene group, a polyoxyalkylene group, or the like may exist in a block form.

As a linking moiety between the main chain and the reactive moiety, for example, an alkylene group or a polyoxyalkylene group may exist.

The reactive group is an addition reactive group or a condensation reactive group, and a condensation reactive group is preferred from the standpoint that the influence of the cure inhibiting substances is small, and a stable reaction rate can be obtained in the curing reaction.

Examples of the condensation reactive group include a silanol group, an oximesilyl group, an acyloxysilyl group, an alkoxysilyl group, an alkenyloxysilyl group, an aminosilyl group, and an amidosilyl group, in which a silanol group, an oximesilyl group, an acyloxysilyl group, an alkoxysilyl group, and an alkenyloxysilyl group are preferred, a silanol group, an oximesilyl group, an alkoxysilyl group, and an alkenyloxysilyl group are more preferred, a silanol group, an oximesilyl group, an alkoxysilyl group, and an alkenyloxysilyl group are further preferred, and a silanol group and an oximesilyl group are still further preferred.

The oxime group is preferably an oxime group having 1 to 10 carbon atoms, more preferably a dimethylketoxime group, a methylethylketoxime group, a diethylketoxime group, a methylisopropylketoxime group, and a methylisobutylketoxime group, and further preferably a methylethylketoxime group and a methylisobutylketoxime group.

The alkoxy group is preferably an alkoxy group having 1 to 6 carbon atoms, more preferably a methoxy group, an ethoxy group, a propoxy group, and a butoxy group, further preferably a methoxy group and an ethoxy group, and still further preferably a methoxy group.

Two or more oxime groups or alkoxy groups may be bonded to one silicon atom as condensation reactive groups, and two or more of these groups are preferably bonded to one silicon atom.

Examples of the position of the reactive moiety include the direct bond to the silicon atom in the main chain, the inside of the side chain, the both ends of the main chain, and one of the ends of the main chain, in which the both ends of the main chain are preferred.

The curable organopolysiloxane (A) is preferably a curable organopolysiloxane having a reactive group. Specific examples thereof include a silanol group-containing silicone, an oximesilyl group-containing silicone, an alkoxy group-containing silicone, and an enol silyl ether group-containing silicone, in which a silanol group-containing silicone, an oximesilyl group-containing silicone, and an alkoxy group-containing silicone are preferred, and a silanol group-containing silicone and an oximesilyl group-containing silicone are more preferred.

The curable organopolysiloxane (A) having a reactive group is preferably a compound forming silicone rubber through curing, and for example, is preferably a compound represented by the following formula (A1): 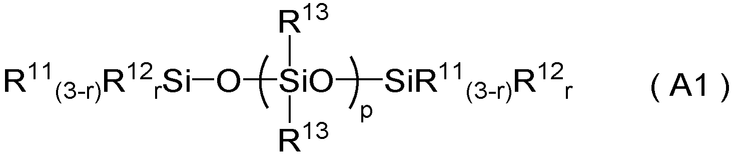 in the formula (A1), R¹¹ and R¹³ each independently represent a hydrogen atom, or any of an alkyl group, an alkenyl group, an aryl group, an aralkyl group, and a halogenated alkyl group, each group having 1 to 16 carbon atoms, R¹² each independently represent a hydroxy group or a hydrolyzable group, r represents an integer of 1 to 3, and p represents a number of 10 to 10,000.

In the formula (A1), R¹¹ and R¹³ each independently represent a hydrogen atom, or any of an alkyl group, an alkenyl group, an aryl group, an aralkyl group, an alkoxy group, and a halogenated alkyl group, each group having 1 to 16 carbon atoms.

The alkyl group for R¹¹ and R¹³ has 1 to 16 carbon atoms, and examples thereof include a methyl group, an ethyl group, a propyl group, a butyl group, a pentyl group, a hexyl group, and a heptyl group.

The alkenyl group for R¹¹ and R¹³ has 2 to 16 carbon atoms, and examples thereof include a vinyl group, an allyl group, a propenyl group, an isopropenyl group, a butenyl group, an isobutenyl group, a pentenyl group, a heptenyl group, a hexenyl group, and a cyclohexenyl group.

The aryl group for R¹¹ and R¹³ has 6 to 16 carbon atoms, and may have a substituent, such as an alkyl group, on the aromatic ring, and examples thereof include a phenyl group, a tolyl group (methylphenyl group), a xylyl group (dimethylphenyl group), and a naphthyl group.

The aralkyl group for R¹¹ and R¹³ has 7 to 16 carbon atoms, and examples thereof include a benzyl group, a 2-phenylethyl group, a 2-naphthylethyl group, and a diphenylmethyl group.

The halogenated alkyl group for R¹¹ and R¹³ has 1 to 16 carbon atoms, and examples thereof include groups obtained by replacing a part or the whole of the hydrogen atoms contained in the alkyl groups by a halogen atom, such as a fluorine atom, a chlorine atom, a bromine atom, and an iodine atom.

Among the above, R¹¹ in the formula (A1) preferably represents a hydrogen atom, an alkyl group, an alkenyl group, or an aryl group, more preferably represents a methyl group, an ethyl group, a vinyl group, or a phenyl group, and further preferably represents a methyl group or a vinyl group.

R¹³ in the formula (A1) preferably represents a hydrogen atom, an alkyl group, an alkenyl group, or an aryl group, more preferably represents a methyl group, an ethyl group, a vinyl group, or a phenyl group, further preferably represents a methyl group, an ethyl group, or a phenyl group, and still further preferably represents a methyl group or a phenyl group.

The multiple groups represented by R¹³ may be the same as or different from each other. In the case where the multiple groups represented by R¹¹ exist, the groups may be the same as or different from each other.

In the formula (A1), R¹² each independently represent a hydroxy group or a hydrolyzable group.

Examples of the hydrolyzable group for R¹² include an oxime group, an acyloxy group, an alkoxy group, an alkenyloxy group, an amino group, an amido group, and an aminoxy group.

The oxime group for R¹² is preferably an oxime group having 1 to 10 carbon atoms in total, examples thereof include a dimethylketoxime group, a methylethylketoxime group, a diethylketoxime group, a methylisopropylketoxime group, and methylisobutylketoxime group.

The acyloxy group (RC(=O)O-) for R¹² is preferably an aliphatic acyloxy group having 1 to 10 carbon atoms in total or an aromatic acyloxy group having 7 to 12 carbon atoms in total, and examples thereof include an acetoxy group, a propionyloxy group, a butylyloxy group, and a benzoyloxy group.

The alkoxy group for R¹² is preferably an alkoxy group having 1 to 10 carbon atoms in total. In the alkoxy group for R¹², one or more oxygen atoms between one or more carbon atoms may be present.

Specific examples of the alkoxy group for R¹² include a methoxy group, an ethoxy group, a propoxy group, a butoxy group, a methoxyethoxy group, and an ethoxyethoxy group.

The alkenyloxy group for R¹² is preferably an alkenyloxy group having 3 to 10 carbon atoms, and examples thereof include an isopropenyloxy group, an isobutenyloxy group, and a 1-ethyl-2-methylbinyloxy group.

The amino group for R¹² is preferably an amino group having 1 to 10 carbon atoms, and examples thereof include an N-methylamino group, an N-ethylamino group, an N-propylamino group, an N-butylamino group, an N,N-dimethylamino group, an N,N-diethylamino group, and a cyclohexylamino group.

The amido group for R¹² is preferably an amido group having 2 to 10 carbon atoms in total, and examples thereof include an N-methylacetamide group, an N-ethylacetamide group, and an N-methylbenzamide group.

The aminoxy group for R¹² is preferably an aminoxy group having 2 to 10 carbon atoms in total, and examples thereof include an N,N-dimethylaminoxy group and an N,N-diethylaminoxy group.

Among these, R¹² in the formula (A1) preferably represents a hydroxy group, an oxime group, or an alkoxy group, more preferably represents a hydroxy group or an oxime group, and further preferably represents a hydroxy group, a methylethylketoxime group, or a methylisobutylketoxime group, from the standpoint of forming the antifouling coating film excellent in curability and antifouling capability.

In the case where the antifouling coating film formed with the antifouling coating composition is a clear coating film that does not contain the pigment (J) described later, a methylisobutylketoxime group is preferred from the standpoint of achieving the excellent transparency.

The multiple groups represented by R¹² may be the same as or different from each other.

In the formula (A1), r represents an integer of 1 to 3.

In the case where R¹² represents a hydroxy group, r preferably represents 1, and in the case where R¹² represents a substituent other than a hydroxy group, r preferably represents 2.

In the formula (A1), p represents a number of 10 to 10,000, and preferably 100 to 1,000, and may be appropriately regulated to satisfy the weight average molecular weight described below.

p means the average repetition number of the group -(SiR¹³₂-O)-.

The weight average molecular weight (Mw) of the curable organopolysiloxane (A) is preferably 500 or more, more preferably 5,000 or more, further preferably 10,000 or more, still further preferably 15,000 or more, and still more further preferably 20,000 or more, and is preferably 1,000,000 or less, more preferably 100,000 or less, further preferably 50,000 or less, and still further preferably 40,000 or less, from the standpoint of enhancing the workability in producing the coating composition, and the standpoint of enhancing the coating workability and the curability of the coating composition, and the strength of the coating film formed therewith.

In the present embodiment, the "weight average molecular weight (Mw)" and the "number average molecular weight (Mn)" described later are measured by GPC (gel permeation chromatograph) and calculated by converting with the standard polystyrene having known molecular weights.

The viscosity at 25°C of the curable organopolysiloxane (A) is preferably 20 mPa·s or more, more preferably 100 mPa·s or more, further preferably 500 mPa·s or more, and still further preferably 1,000 mPa·s or more, and is preferably 100,000 mPa·s or less, more preferably 10,000 mPa·s or less, further preferably 5,000 mPa·s or less, and still further preferably 3,000 mPa·s or less, from the standpoint of enhancing the workability in producing the coating composition, and the standpoint of enhancing the coating workability and the curability of the coating composition, and the strength of the coating film formed therewith.

In the description herein, the viscosity at 25°C of the curable organopolysiloxane (A) is a viscosity that is measured with a B-type rotary viscometer (for example, Type BM, available from Tokyo Keiki Inc.)

The content of the curable organopolysiloxane (A) in the coating composition is preferably 30% by mass or more, more preferably 40% by mass or more, and further preferably 50% by mass or more, and is preferably 90% by mass or less, more preferably 80% by mass or less, and further preferably 70% by mass or less, from the standpoint of enhancing the antifouling capability and the strength of the antifouling coating film thus formed.

The content of the curable organopolysiloxane (A) in the solid content of the coating composition is preferably 50% by mass or more, more preferably 60% by mass or more, and further preferably 65% by mass or more, and is preferably 99% by mass or less, more preferably 90% by mass or less, and further preferably 80% by mass or less.

In the description herein, the "solid content of the coating composition" means the ingredients excluding the organic solvent (K) described later and the volatiles contained as a solvent in the ingredients, and the "content in the solid content of the coating composition" can be calculated as a content in the solid content that is obtained by drying the coating composition in a hot air dryer at 125°C for 1 hour.

The curable organopolysiloxane (A) used can be a commercially available product. Examples of the commercially available product include "DMS-S35", available from Gelest, Inc., and "KE-445", available from Shin-Etsu Chemical Co., Ltd. The curable organopolysiloxane (A) used can also be the materials described in JP 2001-139816 A.

### <Glycerin Condensate Ester (B)>

The coating composition of the present embodiment contains the glycerin condensate ester (B) represented by the following formula (1). The particular glycerin condensate ester (B) contained in the coating composition of the present embodiment can impart good slippage to the antifouling coating film formed of the coating composition, thereby enhancing the adherence inhibition capability (antifouling capability) against aquatic organisms.

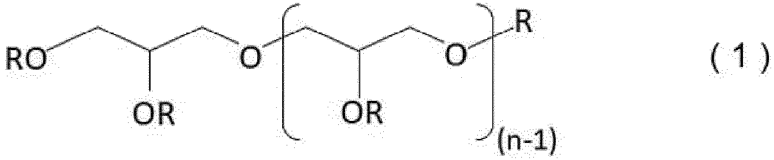

In the formula (1), n represents an integer of 2 or more and 20 or less, and R each independently represent a hydrogen atom or R¹C(=O)-, provided that at least one of R represents R¹C(=O)-, in which R¹ represents a monovalent hydrocarbon group having 7 or more and 23 or less carbon atoms.

In the formula (1), n represents an integer of 2 or more and 20 or less, is preferably an integer of 3 or more, and is preferably an integer of 16 or less, more preferably an integer of 12 or less, and further preferably an integer of 10 or less, from the standpoint of the antifouling capability and the availability.

R each independently represent a hydrogen atom or R¹C(=O)-, provided that at least one of R represents R¹C(=O)-, in which R¹ represents a monovalent hydrocarbon group having 7 or more and 23 or less carbon atoms. It is preferred that at least one of R represents R¹C(=O)- from the standpoint that the coating workability and the leveling property of the coating composition, and the appearance, the smoothness, and the adhesiveness of the formed antifouling coating film to the substrate or the undercoating are excellent.

R¹ has preferably 9 or more carbon atoms, more preferably 11 or more carbon atoms, and further preferably 15 or more carbon atoms, and is preferably 21 or less carbon atoms, and more preferably 19 or less carbon atoms, from the standpoint of the antifouling capability.

The monovalent hydrocarbon group may be either a saturated hydrocarbon group or an unsaturated hydrocarbon group, may be either an aliphatic hydrocarbon group or an aromatic hydrocarbon group, and may be either linear, branched, or cyclic. Examples of the monovalent hydrocarbon group include an alkyl group, an alkenyl group, an aryl group, and an aralkyl group. Among these, R¹ preferably represents a group including a branched hydrocarbon group, more preferably represents a branched hydrocarbon group, further preferably represents a branched aliphatic hydrocarbon group, and still further preferably a branched alkyl group.

R preferably represents an isostearoyl group, a 2-ethylhexanoyl group, or a ricinoleoyl group, and more preferably represents an isostearoyl group.

The glycerin condensate ester (B) is a condensed ester compound of a fatty acid having 8 or more and 24 or less carbon atoms and polyglycerin.

The polyglycerin is a condensate of glycerin, and the glycerin condensate ester (B) is a compound obtained by subjecting a fatty acid having 8 or more and 24 or less carbon atoms and polyglycerin to mixing, heating, and the like procedure.

Examples of the fatty acid having 8 or more and 24 or less carbon atoms include octanoic acid, 2-ethylhexanoic acid, isononanoic acid, capric acid, lauric acid, palmitic acid, stearic acid, isostearic acid, behenic acid, oleic acid, erucic acid, hydroxystearic acid, ricinoleic acid, and coconut oil fatty acid, in which isostearic acid, 2-ethylhexanoic acid, and ricinoleic acid are preferred, and isostearic acid is more preferred.

In the glycerin condensate ester (B), it is preferred that at least one of R represents a hydrogen atom from the standpoint that the coating workability of the coating composition, and the antifouling capability and the adhesiveness of the formed antifouling coating film to the substrate or the undercoating are excellent. In other words, it is preferred that at least a part of the hydroxy groups remain unreacted, but not a completely esterified product.

The glycerin condensate ester (B) has (n+2) groups represented by R. In the (n+2) groups represented by R, the proportion of R that represents R¹C(=O)- is preferably 10% or more, more preferably 20% or more, further preferably 35% or more, and still further preferably 40% or more, and is preferably 95% or less, more preferably 90% or less, and further preferably 85% or less.

The glycerin condensate ester (B) preferably has flowability, and more preferably is a liquid, at 25°C. In the case where the glycerin condensate ester (B) has flowability, it is considered that the mobility inside the antifouling coating film is increased to enhance the effect of imparting slippage to the surface thereof. Furthermore, it is also preferred since the viscosity of the coating composition is reduced to achieve the good coatability.

The glycerin condensate ester (B) used may be a commercially available product, and examples thereof include EMALEX series (available from Nihon Emulsion Co., Ltd.), NIKKOL series (available from Nikko Chemicals Co., Ltd.), SUNSOFT series and SUNOIL series (available from Taiyo Kagaku Co., Ltd.), and SY GLYSTER and S FACE series (available from Sakamoto Yakuhin Kogyo Co., Ltd.). Among these, EMALEX DISG-2, DISG-3, DISG-6, DISG-10, TISG-2, and TISG-10 are preferred for EMALEX series, NIKKOL DECAGLYN 5-ISV and 10-ISV are preferred for NIKKOL series, and S FACE IS-1005P and IS-1009P are preferred for SY GLYSTER and S FACE series.

The content of the glycerin condensate ester (B) in the coating composition is preferably 0.5% by mass or more, more preferably 1% by mass or more, further preferably 3% by mass or more, and still further preferably 4% by mass or more, and is preferably 20% by mass or less, more preferably 15% by mass or less, further preferably 12% by mass or less, and still further preferably 8% by mass or less, from the standpoint of enhancing the antifouling capability.

The content of the glycerin condensate ester (B) in the solid content of the coating composition is preferably 1% by mass or more, more preferably 3% by mass or more, and further preferably 5% by mass or more, and is preferably 20% by mass or less, more preferably 17% by mass or less, further preferably 15% by mass or less, and still further preferably 10% by mass or less, from the standpoint of the coating workability and the storage stability of the coating composition, and the antifouling capability, the adhesiveness of the formed antifouling coating film to the substrate or the undercoating, and the excellent appearance thereof.

The coating composition of the present embodiment may contain additional ingredients in addition to the curable organopolysiloxane (A) and the glycerin condensate ester (B) described above. Examples of the additional ingredients include an inorganic filler (C), a silane coupling agent (D), a silicone oil (E), an acrylic based polymer (F) having a hydrophilic group, an antifouling agent (G), an organosilicon crosslinking agent (H), a curing catalyst (I), a pigment (J), and an organic solvent (K).

The additional ingredients will be described in detail below.

### <Inorganic Filler (C)>

The coating composition of the present embodiment may contain an inorganic filler (C) for the purpose of enhancing the flowability and the thixotropy of the coating composition.

**In** the case where the coating composition of the present embodiment contains an inorganic filler (C), the flowability and the thixotropy of the coating composition are improved as described above, and thereby a coating film having a sufficient thickness can be formed even on a vertical coating surface with a smaller number of coating processes. Furthermore, the properties of the resulting coating film, such as the hardness, the tensile strength, and the elongation, can be enhanced in a well-balanced manner.

Examples of the inorganic filler (C) include silica, mica, calcium carbonate, aluminum carbonate, magnesium carbonate, barium carbonate, aluminum oxide, titanium oxide, aluminum hydroxide, aluminum silicate, magnesium silicate, potassium feldspar, zinc oxide, kaolin, alumina white, barium sulfate, calcium sulfate, zinc sulfide, and glass short fibers. One kind of the inorganic fillers may be used alone, or two or more kinds thereof may be used in combination.

Among these, the inorganic filler (C) is preferably silica from the standpoint of enhancing the properties of the resulting coating film, such as the hardness, the tensile strength, and the elongation, in a well-balanced manner.

Examples of the silica used include hydrophilic silica (surface-untreated silica), such as wet silica (hydrated silica) and dry silica (e.g., fumed silica and anhydrous silica). Further, hydrophobic silica obtained by subjecting the surface of silica to a hydrophobizing treatment, specifically hydrophobic wet silica and hydrophobic fumed silica, can also be used. One kind of these kinds of silica may be used alone, or two or more kinds thereof may be used in combination.

Among these, hydrophobized silica obtained by subjecting the surface of silica to a hydrophobizing treatment is preferred from the standpoint of the excellent dispersibility thereof in the coating composition.

The wet silica is not particularly limited, and for example, is preferably wet silica having an adsorbed water content of 4 to 8% by mass, a bulk density of 200 to 300 g/L, a primary particle diameter of 10 to 30 µm, and a specific surface area (BET surface area) of 10 m²/g or more.

The dry silica is not particularly limited, and for example, is preferably dry silica having an adsorbed water content of 1.5% by mass or less, a bulk density of 50 to 100 g/L, a primary particle diameter of 8 to 20 µm, and a specific surface area of 10 m²/g or more.

Examples of the hydrophobic fumed silica include dry silica having been surface-treated with an organosilicon compound, such as methyltrichlorosilane, dimethyldichlorosilane, hexamethyldisilazane, hexamethylcyclotrisiloxane, and octamethylcyclotetrasiloxane. The hydrophobic fumed silica undergoes small water adsorption with the lapse of time, and the water content thereof is preferably 0.3% by mass or less, and more preferably 0.1 to 0.2% by mass.

The hydrophobic fumed silica is not particularly limited, and for example, is preferably hydrophobic fumed silica having a primary particle diameter of 5 to 50 nm, a bulk density of 50 to 100 g/L, and a specific surface area of 10 m²/g or more. In the case where the hydrophobic fumed silica is subjected to the heat treatment described later, the amount of water adsorbed on the surface of the hydrophobic fumed silica may be decreased in some cases after the heat treatment. The water content of the hydrophobic fumed silica in this case is preferably 0.2% by mass or less, more preferably 0.1% by mass or less, and further preferably 0.05 to 0.1% by mass.

The silica used can be a commercially available product. Examples of the commercially available product include "AEROSIL R974", "AEROSIL RX200", and "AEROSIL 200", available from Nippon Aerosil Co., Ltd. The silica used can also be the materials described in JP 2001-139816 A.

The silica may be a heat-treated material obtained by subjecting to a heat treatment in advance with the curable organopolysiloxane (A). **In** the case where the silica and a part or the whole of the curable organopolysiloxane (A) are heat-treated in advance, the affinity between both ingredients is enhanced, resulting in an effect of preventing the silica from being aggregated, and the like.

Examples of the method of subjecting the silica and the curable organopolysiloxane (A) to a heat-treatment include a method of heat-treating the ingredients under ordinary pressure or reduced pressure, preferably at 100°C or more and the decomposition temperatures of the ingredients to be blended or less, more preferably 100 to 300°C, and further preferably 140 to 200°C, preferably for 3 to 30 hours.

The silica may be blended in the coating composition in the form of a kneaded material obtained by kneading with the curable organopolysiloxane (A). The use of the kneaded material obtained by kneading the curable organopolysiloxane (A) and the silica can prevent the viscosity of the coating composition from being excessively increased.

Examples of the method for producing the kneaded material of the silica and the curable organopolysiloxane (A) include the method described in JP 2004-182908 A.

**In** the case where the coating composition of the present embodiment contains the inorganic filler (C), the amount of the inorganic filler (C) per 100 parts by mass of the curable organopolysiloxane (A) is preferably 0.5 part by mass or more, more preferably 1 part by mass or more, and further preferably 2 parts by mass or more, from the standpoint of enhancing the thixotropy of the coating composition, and the standpoint of enhancing the strength of the coating film and the hardness of the coating film, and is preferably 50 parts by mass or less, more preferably 20 parts by mass or less, further preferably 10 parts by mass or less, and still further preferably 5 parts by mass or less, from the standpoint of preventing the viscosity of the coating composition from being excessively increased.

**In** the case where the coating composition of the present embodiment contains the inorganic filler (C), the content of the inorganic filler (C) in the solid content of the coating composition is preferably 0.5% by mass or more, more preferably 1% by mass or more, and further preferably 1.5% by mass or more, from the standpoint of enhancing the thixotropy of the coating composition, and the standpoint of enhancing the strength of the coating film and the hardness of the coating film, and is preferably 50% by mass or less, more preferably 20% by mass or less, further preferably 10% by mass or less, and still further preferably 5% by mass or less, from the standpoint of preventing the viscosity of the coating composition from being excessively increased.

### <Silane Coupling Agent (D)>

The antifouling coating composition of the present embodiment may contain a silane coupling agent (D) for the purpose of enhancing the adhesiveness of the formed antifouling coating film to the substrate or the undercoating.

The silane coupling agent (D) used is preferably, for example, a compound represented by the following formula (D1).

(R²¹O)_{w}R²²_{(3-w)}Si-R²³-Z ( D1 )

In the formula (D1), R²¹ and R²² each independently represent any of an alkyl group, an alkenyl group, an aryl group, and a halogenated alkyl group, each having 1 to 10 carbon atoms, and preferably a methyl group or an ethyl group.

In the formula (D1), R²³ represents a divalent hydrocarbon group having 1 to 20 carbon atoms, which may be connected via an amino group (-NR-, in which R represents a hydrogen atom or a hydrocarbon group having 1 to 10 carbon atoms), an ether group (-O-), a thioether group (-S-), an ester group (-C(=O)-O-), or an amido group (-C(=O)-NR-, in which R represents a hydrogen atom or a hydrocarbon group having 1 to 10 carbon atoms), and preferably an alkylene group having 4 to 11 carbon atoms, which may be connected via the amino group.

In the formula (D1), Z represents a polar group, preferably an amino group, an imino group, a glycidyl group, an isocyanate group, a thiol group, a hydrosilyl group, or a (meth)acrylic group, and further preferably an amino group.

In the formula (D1), w represents an integer of 2 or 3, and preferably 3.

Examples of the silane coupling agent (D) include 3-(2-aminoethyl)aminopropyltrimethoxysilane, 3-aminopropyltrimethoxysilane, 3-aminopropyltriethoxysilane, 3-(2-(2-aminoethyl)aminoethyl)aminopropyltrimethoxysilane, 3-glycidoxypropyltrimethoxysilane, 3-isocyanatopropyltrimethoxysilane, 3-mercaptopropyltrimethoxysilane, and N-phenyl-3-aminopropyltrimethoxysilane, and partial condensates thereof may also be used.

One kind of these silane coupling agents (D) may be used alone, or two or more kinds thereof may be used in combination.

In the case where the antifouling coating composition of the present embodiment contains the silane coupling agent (D), the content of the silane coupling agent (D) in the solid content of the coating composition is preferably 0.01% by mass or more, more preferably 0.05% by mass or more, and further preferably 0.1% by mass or more, and is preferably 5% by mass or less, more preferably 2% by mass or less, further preferably 0.5% by mass or less, and still further preferably 0.3% by mass or less, from the standpoint of enhancing the adhesiveness of the formed antifouling coating film to the substrate or the undercoating.

### <Silicone Oil (E)>

The antifouling coating composition of the present embodiment may contain a silicone oil (E) for the purpose of enhancing the antifouling capability of the formed antifouling coating film.

The silicone oil (E) is preferably a silicone oil represented by the following formula (E1): 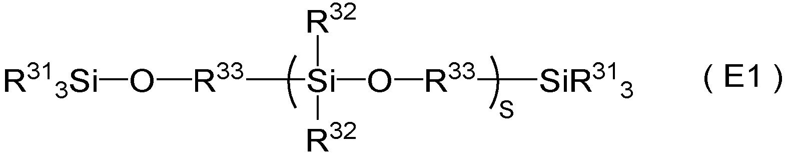 in the formula (E1), R³¹ and R³² each independently represent a hydrogen atom, or any of an alkyl group, an alkenyl group, an aryl group, an aralkyl group, and a halogenated alkyl group, each having 1 to 50 carbon atoms, which may have a hetero atom, R³³ represents a single bond, or a divalent hydrocarbon group having 1 to 50 carbon atoms, which may be connected via an amino group, an ether group, a thioether group, an ester group, or an amido group, and s represents an integer of 10 to 1,000.

In the case where R³¹ and R³² in the formula (E1) each represent any of an alkyl group, an alkenyl group, an aryl group, an aralkyl group, and a halogenated alkyl group, each having 1 to 50 carbon atoms, these groups each independently may be a group having a hetero atom in the structure thereof, i.e., a group including a group having a hetero atom in the structure thereof. Examples of the hetero atom include oxygen, nitrogen, and sulfur, and examples of the group having a hetero atom include an amino group, an amido group, an ether group, an ester group, an alcohol group, a carboxy group, a thioether group, and a thiol group.

The multiple groups represented by each of R³¹ and R³² may be the same as or different from each other.

The silicone oil (E) is preferably a compound in which all the groups represented by R³¹ and R³² are constituted only by an alkyl group, or constituted by an alkyl group and an aryl group.

The silicone oil (E) in which all the groups represented by R³¹ and R³² are constituted only by an alkyl group is preferably a compound in which all of the multiple groups represented by R³¹ and R³² are constituted only by a methyl group (which may be hereinafter referred to as "polydimethylsiloxane (unmodified)"), or constituted by a methyl group and an additional alkyl group, and more preferably a compound having the additional alkyl group having an ether group. Examples of the additional alkyl group having an ether group include a group having a chemical structure represented by -R(C₂H₄O)ₐ(C₃H₆O)_{b}R' (in which R represents an alkylene group having 1 to 20 carbon atoms, R' represents an alkyl group having 1 to 20 carbon atoms, and a and b each represent an integer of 0 to 30, provided that a+b is an integer of 1 or more). In the following description, the silicone oil (E) in which the groups represented by R³¹ and R³² are constituted by methyl group and an alkyl group having an ether group may be referred to as "ether-modified polydimethylsiloxane".

Examples of the silicone oil (E) in which the groups represented by R³¹ and R³² are constituted by an alkyl group and an aryl group is preferably a compound in which the groups represented by R³¹ and R³² are constituted by an methyl group and a phenyl group (which may be hereinafter referred to as "phenyl-modified polydimethylsiloxane"), and more preferably a compound having a ratio of the phenyl group occupied in the groups represented by R³¹ and R³² (i.e., a phenyl modification rate) of 3 to 50%.

In the formula (E1), R³³ represents a single bond, or a divalent hydrocarbon group having 1 to 50 carbon atoms, which may be connected via an amino group, an ether group, a thioether group, an ester group, or an amido group.

The multiple groups represented by R³³ may be the same as or different from each other.

R³³ preferably represents a single bond. In the case where R³³ represents a divalent hydrocarbon group having 1 to 50 carbon atoms bonded via an ether group, examples thereof include a group having a chemical structure represented by -R(C₂H₄O)ₐ(C₃H₆O)_{b}R"- (in which R and R" each independently represent an alkylene group having 1 to 10 carbon atoms, and a and b each represent an integer of 0 to 30, provided that a+b is an integer of 1 or more).

The viscosity at 23°C of the silicone oil (E) is preferably 10 mPa·s or more, more preferably 20 mPa·s or more, further preferably 40 mPa·s or more, still further preferably 60 mPa·s or more, and still more further preferably 80 mPa·s or more, and is preferably 10,000 mPa·s or less, more preferably 5,000 mPa·s or less, further preferably 3,000 mPa·s or less, and still further preferably 2,000 mPa·s or less, from the standpoint of enhancing the workability in producing the coating composition, and the standpoint of enhancing the spray atomizability and the curability of the coating composition, and the strength of the formed coating film.

In the description herein, the viscosity at 23°C of the silicone oil (E) is a viscosity that is measured with a B-type rotary viscometer.

In the antifouling coating composition of the present embodiment, one kind of the silicone oil (E) may be used alone, or two or more kinds thereof may be used in combination.

In the case where the antifouling coating composition of the present embodiment contains the silicone oil (E), the content of the silicone oil (E) in the solid content of the coating composition is preferably 0.1% by mass or more, more preferably 1% by mass or more, and further preferably 3% by mass or more, and is preferably 30% by mass or less, more preferably 20% by mass or less, and further preferably 10% by mass or less, from the standpoint of enhancing the antifouling capability of the formed antifouling coating film.

The silicone oil (E) used can be a commercially available product. Examples of the commercially available product include "KF-96-1,000cs" (available from Shin-Etsu Chemical Co., Ltd.) for the polydimethylsiloxane (unmodified), "KF-50-1,000cs" (available from Shin-Etsu Chemical Co., Ltd., phenyl modification rate: 5%, kinematic viscosity (25°C): 1,000 mm²/s) for the phenyl-modified polydimethylsiloxane, and "X-22-4272" (available from Shin-Etsu Chemical Co., Ltd., an ether-modified polydimethylsiloxane in which a part of R³¹ is an alkyl group having an ether group), "KF-6020" (available from Shin-Etsu Chemical Co., Ltd., an ether-modified polydimethylsiloxane in which a part of R³² is an alkyl group having an ether group, kinematic viscosity (25°C): 180 mm²/s), "FZ-2203" (available from Dow Corning Toray Co., Ltd., a polydimethylsiloxane in which a part of R³³ is an alkylene group having an ether group), and "FZ-2160" (available from Dow Corning Toray Co., Ltd., a polydimethylsiloxane in which a part of R³² is a propylene group having an ether group) for the ether-modified polydimethylsiloxane.

<Acrylic Based Polymer (F) having Hydrophilic Group>

The coating composition of the present embodiment may contain an acrylic based polymer (F) having a hydrophilic group for the purpose of imparting good slippage to the antifouling coating film formed of the coating composition, thereby enhancing the adherence inhibition capability (antifouling capability) against aquatic organisms.

The acrylic based polymer (F) having a hydrophilic group used in the coating composition preferably contains a structural unit derived from a monomer having a hydrophilic group, more preferably contains a structural unit derived from a monomer having a hydrophilic group and a structural unit derived from a hydrophobic monomer, and further preferably is formed of a structural unit derived from a monomer having a hydrophilic group and a structural unit derived from a hydrophobic monomer.

The content of the structural unit derived from a monomer having a hydrophilic group in the acrylic based polymer (F) having a hydrophilic group is preferably 1% by mass or more, more preferably 3% by mass or more, further preferably 5% by mass or more, still further preferably 10% by mass or more, and particularly preferably 20% by mass or more, and is 100% by mass or less, preferably 80% by mass or less, more preferably 70% by mass or less, further preferably 60% by mass or less, and still further preferably 50% by mass or less.

In the case where the acrylic based polymer has a hydrophilic group, it is considered that when the formed antifouling coating film is disposed in water, the hydrophilic moiety of the acrylic based polymer is dissolved or impregnated, and gradually migrates to the surface of the antifouling coating film, and thereby the adhesion of aquatic organisms can be efficiently prevented. Furthermore, it is considered that the acrylic structure thereof is gradually hydrolyzed to change the affinity with water, and thereby the acrylic based polymer gradually migrates to the surface of the antifouling coating film, retaining the antifouling capability for a prolonged period of time.

The hydrophilic group of the monomer having a hydrophilic group is preferably an ether group or a hydroxy group, more preferably an ether group, further preferably a polyether group, and still further preferably a polyethyleneoxy group, from the standpoint of improving the antifouling capability and the damage resistance of the formed antifouling coating film.

The monomer having a hydrophilic group is preferably a monomer having a polyalkylene glycol group or a monomer having a hydroxy group, and more preferably a monomer having a polyalkylene glycol group, from the standpoint of improving the antifouling capability and the damage resistance of the formed antifouling coating film.

Specifically, from the standpoint of enhancing the antifouling capability, one or more kind selected from a polyalkylene glycol (meth)acrylate, a hydroxyalkyl (meth)acrylate, an alkoxyalkyl (meth)acrylate, a tetrahydrofurfuryl (meth)acrylate, a 4-(meth)acryloylmorpholine, and a vinylpyrrolidone is preferred, one or more kind selected from a polyalkylene glycol (meth)acrylate and a hydroxyalkyl (meth)acrylate is more preferred, and a polyalkylene glycol (meth)acrylate is further preferred.

Examples of the polyalkylene glycol (meth)acrylate include a compound in which one end of a polyalkylene glycol is bonded to (meth)acrylic acid directly through ester bond or via a linking group, and the other end thereof is a hydroxy group or an alkoxy group, which is preferably an alkoxy group.

Among the above, a compound in which one end of a polyalkylene glycol is bonded to (meth)acrylic acid directly through ester bond is preferred, and a compound in which the other end is an alkoxy group is more preferred.

(Meth)acrylic acid at the end is preferably acrylic acid or methacrylic acid, and more preferably acrylic acid.

Examples of the alkoxy group at the end include a methoxy group, a phenoxy group, and an octoxy group, in which a methoxy group and a phenoxy group are preferred, and a methoxy group is more preferred.

The polyalkylene glycol constituting the polyalkylene glycol (meth)acrylate is preferably polyethylene glycol, polypropylene glycol, or a copolymer of ethylene glycol and propylene glycol, and more preferably polyethylene glycol.

The average number of the alkylene glycol units constituting the polyalkylene glycol in the polyalkylene glycol (meth)acrylate is preferably 2 or more, more preferably 3 or more, and further preferably 5 or more, and is preferably 25 or less, more preferably 15 or less, and further preferably 12 or less.

Specific examples of the polyalkylene glycol (meth)acrylate include polyethylene glycol mono(meth)acrylate, polypropylene glycol mono(meth)acrylate, poly(ethylene glycol-propylene glycol) mono(meth)acrylate, poly(ethylene glycol-butylene glycol) mono(meth)acrylate, methoxypolyethylene glycol mono(meth)acrylate, allyloxypoly(ethylene glycol-propylene glycol) mono(meth)acrylate, phenoxypoly(ethylene glycol-propylene glycol) methacrylate, octoxypoly(ethylene glycol-propylene glycol) mono(meth)acrylate, dodecyloxypolyethylene glycol mono(meth)acrylate, octadecyloxypolyethylene glycol mono(meth)acrylate, and nonylphenoxypolypropylene glycol acrylate, in which methoxypolyethylene glycol mono(meth)acrylate is preferred.

The polyalkylene glycol (meth)acrylate used may be a commercially available product. Examples of the commercially available product include NK Ester AM-90G (methoxypolyethylene glycol #400 acrylate), NK Ester AM-130G (methoxypolyethylene glycol #550 acrylate), NK Ester M-90G (methoxypolyethylene glycol #400 methacrylate), and NK Ester M-230G (methoxypolyethylene glycol #1000 methacrylate), available from Shin-Nakamura Chemical Co., Ltd., Light Acrylate MTG-A (methoxytriethylene glycol acrylate), Light Acrylate EC-A (ethoxydiethylene glycol acrylate), Light Acrylate EHDG-AT (2-ethylhexyldiethylene glycol acrylate), and Light Ester 041MA (methoxypolyethylene glycol methacrylate), available from Kyoeisha Chemical Co., Ltd., Blemmer ANP-300 (nonylphenoxypolypropylene glycol acrylate), Blemmer AP-400 (polypropylene glycol monoacrylate), Blemmer 70PEP-350B (polyethylene glycol-polypropylene glycol monomethacrylate), Blemmer 55PET-800 (polyethylene glycol-tetramethylene glycol monomethacrylate), Blemmer 50POEP-800B (octoxypolyethylene glycol-polypropylene glycol methacrylate), available from NOF Corporation, and Viscoat #MTG (methoxypolyethylene glycol acrylate), available from Osaka Organic Chemical Industry Ltd.

Examples of the hydroxyalkyl (meth)acrylate include hydroxyethyl (meth)acrylate, hydroxypropyl (meth)acrylate, and hydroxybutyl (meth)acrylate.

The hydroxyalkyl (meth)acrylate used may be a commercially available product. Examples of the commercially available product include LIGHT ESTER HOA(N) (2-hydroxyethyl acrylate), LIGHT ESTER HO-250(N) (2-hydroxyethyl methacrylate), and LIGHT ESTER HOP(N) (2-hydroxypropyl methacrylate), available from Kyoeisha Chemical Co., Ltd.

Examples of the alkoxyalkyl (meth)acrylate include methoxyethyl (meth)acrylate.

The tetrahydrofurfuryl (meth)acrylate is preferably tetrahydrofurfuryl acrylate or tetrahydrofurfuryl methacrylate, and more preferably tetrahydrofurfuryl acrylate.

The 4-(meth)acryloylmorpholine is preferably 4-acryloylmorpholine or 4-methacryloylmorpholine, and more preferably 4-acryloylmorpholine.

Examples of the vinylpyrrolidine include 1-vinyl-2-pyrrolidone (N-vinyl-2-pyrrolidone), 3-acetyl-1-vinylpyrrolidin-2-one, and 3-benzoyl-1-vinylpyrrolidin-2-one, in which 1-vinyl-2-pyrrolidone is preferred.

Examples of the monomer having a hydrophilic group also include (meth)acrylic acid.

The content of the structural unit derived from the hydrophobic monomer in the acrylic based polymer (F) having a hydrophilic group is preferably 99% by mass or less, more preferably 97% by mass or less, further preferably 95% by mass or less, still further preferably 90% by mass or less, and particularly preferably 80% by mass or less, and is preferably 20% by mass or more, more preferably 30% by mass or more, further preferably 40% by mass or more, and still further preferably 50% by mass or more.

It is considered that the acrylic based polymer that contains the hydrophobic monomer can have high affinity with the curable organopolysiloxane (A) and the like as the other ingredients in the antifouling coating composition, thereby exhibiting slippage uniformly on the surface of the antifouling coating film.

Examples of the hydrophobic monomer include an alkyl (meth)acrylate having a linear, branched, or cyclic alkyl group having 1 or more and 30 or less carbon atoms, an aryl (meth)acrylate having an aromatic group having 6 or more and 10 or less carbon atoms, and a (meth)acrylic group-containing silicone, in which an alkyl (meth)acrylate and a (meth)acrylic group-containing silicone are preferred, and an alkyl (meth)acrylate is more preferred.

The alkyl group of the alkyl (meth)acrylate has preferably 1 or more and 30 or less carbon atoms, more preferably 4 or more and 18 or less carbon atoms, further preferably 4 or more and 8 or less carbon atoms, and still further preferably 4 or more and 6 or less carbon atoms.

The alkyl group is linear, branched, or cyclic, preferably linear or branched, and more preferably branched.

Specific examples of the alkyl (meth)acrylate include methyl (meth)acrylate, ethyl (meth)acrylate, propyl (meth)acrylate, isopropyl (meth)acrylate, n-butyl (meth)acrylate, isobutyl (meth)acrylate, tert-butyl (meth)acrylate, n-pentyl (meth)acrylate, hexyl (meth)acrylate, cyclohexyl (meth)acrylate, n-octyl (meth)acrylate, isooctyl (meth)acrylate, 2-ethylhexyl (meth)acrylate, 3,5,5-trimethylhexyl (meth)acrylate, lauryl (meth)acrylate, cetyl (meth)acrylate, stearyl (meth)acrylate, and isostearyl (meth)acrylate, in which n-butyl (meth)acrylate, isobutyl (meth)acrylate, and 2-ethylhexyl (meth)acrylate are preferred.

The aryl group of the aryl (meth)acrylate has preferably 6 or more and 10 or less carbon atoms, and more preferably 6 or more and 7 or less carbon atoms.

Specific examples of the aryl (meth)acrylate include phenyl (meth)acrylate and benzyl (meth)acrylate.

Examples of the (meth)acrylic group-containing silicone include a methacrylic group-containing silicone and an acrylic group-containing silicone, in which a methacrylic group-containing silicone is preferred.

The (meth)acrylic group-containing silicone is preferably a compound having a (meth)acrylic group bonded to one end of the silicone main chain via a linking group and a compound having a (meth)acrylic group bonded directly to one end of the silicone main chain, and more preferably a compound having a (meth)acrylic group bonded to one end of the silicone main chain via a linking group.

The linking group is preferably a trimethylene group.

The silicone main chain is preferably formed of a linear or branched dimethylsilicone (polydimethylsiloxane), and more preferably formed of a linear dimethylsilicone.

At the opposite end thereof to the (meth)acrylic group, it is preferred that an alkyl group having 1 or more and 6 or less carbon atoms exists, and it is more preferred that a butyl group exists.

The (meth)acrylic group-containing silicone used may be a commercially available product. Examples of the commercially available product include SILAPLANE TM-0701T (tris(trimethylsiloxy)silylpropyl methacrylate), SILAPLANE FM-0711 (methacrylic group-containing dimethylpolysiloxane, number average molecular weight: 1,000), and SILAPLANE FM-0721 (methacrylic group-containing dimethylpolysiloxane, number average molecular weight: 5,000), available from JNC Corporation.

The (meth)acrylic group-containing silicone contained can enhance the antifouling capability of the formed antifouling coating film.

The acrylic polymer (F) having a hydrophilic group can be obtained by polymerizing the hydrophilic monomer and the hydrophobic monomer described above, and the polymerization method used may be a known method using a polymerization initiator.

The weight average molecular weight (Mw) of the acrylic based polymer (F) having a hydrophilic group is preferably 1,000 or more, more preferably 3,000 or more, further preferably 5,000 or more, and still further preferably 7,000 or more, and is preferably 30,000 or less, and more preferably 15,000 or less, from the standpoint of improving the viscosity of the antifouling coating composition and the antifouling capability of the formed antifouling coating film.

The weight average molecular weight (Mw) of the acrylic based polymer (F) having a hydrophilic group that is in the range is preferred since the good antifouling capability and damage resistance can be imparted to the formed antifouling coating film.

In the case where the present composition contains the acrylic based polymer (F) having a hydrophilic group, the content thereof in the solid content of the antifouling coating composition is preferably 0.1% by mass or more, more preferably 1% by mass or more, and further preferably 3% by mass or more, and is preferably 40% by mass or less, more preferably 20% by mass or less, further preferably 10% by mass or less, and still further preferably 5% by mass or less, from the standpoint of the antifouling capability and the damage resistance of the formed antifouling coating film.

### <Antifouling Agent (G)>

The antifouling coating composition of the present embodiment may contain an antifouling agent (G) for the purpose of enhancing the antifouling capability of the formed antifouling coating film.

Examples of the antifouling agent (G) include cuprous oxide, copper rhodanide, copper, copper pyrithione, zinc pyrithione, 4-bromo-2-(4-chlorophenyl)-5-(trifluoromethyl)-1H-pyrrole-3-carbonitrile (trivial name: tralopyril), 4,5-dichloro-2-n-octyl-4-isothiazolin-3-one, a borane-nitrogen based base adduct (such as pyridine-triphenylborane and 4-isopropylpyridine-diphenylmethylborane), (+/-)-4-[1-(2,3-dimethylphenyl)ethyl]-1H-imidazole (trivial name: medetomidine), N,N-dimethyl-N'-(3,4-dichlorophenyl)urea, N-(2,4,6-trichlorophenyl)maleimide, 2-methylthio-4-tert-butylamino-6-cyclopropylamino-1,3,5-triazine, 2,4,5,6-tetrachloroisophthalonitrile, bisdimethyldithiocarbamoyl zinc ethylenebisdithiocarbamate, chloromethyl n-octyl disulfide, N,N-dimethyl-N'-phenyl-(N'-fluorodichloromethylthio)sulfamide, tetraalkyl thiuram disulfide, zinc dimethyldithiocarbamate, zinc ethylenebisdithiocarbamate, 2,3-dichloro-N-(2',6'-diethylphenyl)maleimide, and 2,3-dichloro-N-(2'-ethyl-6'-methylphenyl)maleimide. One kind of the antifouling agents may be used alone, or two or more kinds thereof may be used in combination.

Among these, from the standpoint that the storage stability and the curability of the antifouling coating composition and the antifouling capability of the formed antifouling coating film are excellent, cuprous oxide, copper rhodanide, copper, copper pyrithione, zinc pyrithione, tralopyril, 4,5-dichloro-2-n-octyl-4-isothiazolin-3-one, and a borane-nitrogen based base adduct (such as pyridine-triphenylborane and 4-isopropylpyridine-diphenylmethylborane) are preferred, and copper pyrithione is more preferred.

In the case where the antifouling coating composition of the present embodiment contains the antifouling agent (G), the content of the antifouling agent (G) in the solid content of the coating composition is preferably 0.05% by mass or more, and more preferably 1% by mass or more, and is preferably 50% by mass or less, and more preferably 30% by mass or less, from the standpoint of enhancing the antifouling capability of the formed antifouling coating film. In the case where the antifouling coating composition of the present embodiment contains copper pyrithione as the antifouling agent (G), the content of the copper pyrithione in the solid content of the coating composition is preferably 0.5% by mass or more, and more preferably 0.8% by mass or more, and is preferably 20% by mass or less, and more preferably 10% by mass or less, from the standpoint of enhancing the antifouling capability of the formed antifouling coating film.

### <Organosilicon Crosslinking Agent (H)>

The antifouling coating composition of the present embodiment may contain an organosilicon crosslinking agent (H) for the purpose of enhancing the curability and the coating film strength of the antifouling coating film.

The organosilicon crosslinking agent (H) is preferably a compound represented by the following formula (H1) and/or a partial condensate thereof:

R⁵¹_{d}SiY_{(4-d)} (H1)

in the formula (H1), R⁵¹ represent a hydrocarbon group having 1 to 6 carbon atoms, Y each independently represent a hydrolyzable group, and d represents an integer of 0 to 2.

In the formula (H1), R⁵¹ each independently represent a hydrocarbon group having 1 to 6 carbon atoms, and examples thereof include a linear or branched alkyl group, such as a methyl group, an ethyl group, and a propyl group, a cyclic alkyl group, such as a cyclohexyl group, an alkenyl group, such as a vinyl group, and an aryl group, such as a phenyl group, in which a methyl group and an ethyl group are preferred.

In the case where d is 2, the multiple groups represented by R⁵¹ may be the same as or different from each other.

In the formula (H1), Y each independently represent a hydrolyzable group, and examples of the hydrolyzable group include the hydrolyzable groups exemplified for the formula (A1). Among these, an alkoxy group and an oxime group are preferred, in which the alkoxy group is more preferably a methoxy group or an ethoxy group, and the oxime group is more preferably a methylethylketoxime group or a methylisobutylketoxime group.

d represents an integer of 0 to 2, and preferably represents 0 or 1, and more preferably 0, for the case where Y represents an alkoxy group, preferably represents 1 for the case where Y represents an oxime group, from the standpoint of enhancing the curability and the coating film strength of the antifouling coating film.

The organosilicon crosslinking agent (H) used may be a commercially available product. Examples of the commercially available product for tetraethyl orthosilicate include "ETHYL SILICATE 28", available from Colcoat Co., Ltd., and "TETRA ETHYL ORTHOSILICATE", available from Tama Chemicals Co., Ltd. Examples thereof for the partial condensate of tetraethyl orthosilicate include "SILICATE 40", available from Tama Chemicals Co., Ltd., and "WACKER SILICATE TES 40 WN", available from Wacker Asahikasei Silicone Co., Ltd. Examples thereof for alkyltrialkoxysilane include "KBM-13", available from Shin-Etsu Chemical Co., Ltd. Examples thereof for vinyltris(methylethylketoxime)silane include "BCA-100", available from Shin-Etsu Chemical Co., Ltd.

In the case where the coating composition of the present embodiment contains organosilicon crosslinking agent (H), the content of the organosilicon crosslinking agent (H) in the solid content of the coating composition is preferably 0.2% by mass or more, more preferably 1% by mass or more, and further preferably 2% by mass or more, and is preferably 20% by mass or less, more preferably 10% by mass or less, and further preferably 5% by mass or less, from the standpoint of regulating the curing rate of the formed coating film, and the standpoint of enhancing the coating film strength.

### <Curing Catalyst (I)>

The antifouling coating composition of the present embodiment may contain a curing catalyst (I) for the purpose of enhancing the curing rate of the formed coating film and enhancing the coating film strength thereof.

Examples of the curing catalyst (I) include the curing catalysts described in JP 4-106156 A.

Specific examples thereof include:
a tin carboxylate compound, such as tin naphthenate and tin oleate;
a tin compound, such as dibutyltin diacetate, dibutyltin acetoacetonate, dibutyltin dilaurate, dibutyltin dioleate, dibutyltin oxide, dibutyltin dimethoxide, dibutyltin dipentanoate, dibutyltin dioctoate, dibutyltin dineodecanoate, dioctyltin dineodecanoate, bis(dibutyltin dilaurate) oxide, dibutylbis(triethoxysiloxy)tin, bis(dibutyltin diacetate) oxide, dibutyltin bis(ethyl maleate), and dioctyltin bis(ethyl maleate);
a titanate ester or a titanium chelate compound, such as tetraisopropoxytitanium, tetra-n-butoxytitanium, tetrakis(2-ethylhexoxy)titanium, dipropoxybis(acetylacetonato)titanium, and titanium isopropoxy octyl glycol;
an organometallic compound, such as zinc naphthenate, zinc stearate, zinc 2-ethyloctoate, iron 2-ethylhexanoate, cobalt 2-ethylhexanoate, manganese 2-ethylhexanoate, cobalt naphthenate, and an alkoxy aluminum compound; and
a lower fatty acid salt of an alkali metal, such as potassium acetate, sodium acetate, and lithium oxalate.

The curing catalyst (I) used may be a commercially available product. Examples thereof include "NEOSTAN U-100", available from Nitto Chemical Industry Co., Ltd., and "K-KAT XK-618", available from King Industries, Inc.

In the case where the coating composition of the present embodiment contains the curing catalyst (I), the content of the curing catalyst (I) in the solid content of the coating composition is preferably 0.01% by mass or more, more preferably 0.1% by mass or more, and further preferably 1% by mass or more, and is preferably 10% by mass or less, more preferably 5% by mass or less, and further preferably 3% by mass or less, from the standpoint of enhancing the curing rate of the formed coating film, and the standpoint of improving the balance to the usable time after preparing the coating composition.

### <Pigment (J)>

The coating composition of the present embodiment may contain a pigment (J) other than the inorganic filler (C), for the purpose of enhancing the design and the visibility of the coating composition and the coating film thereof.

While the pigment (J) is not particularly limited, examples thereof include an inorganic pigment, such as iron oxide, titanium oxide, carbon black, and zinc oxide, and an organic pigment, such as naphthol red and phthalocyanine blue, and an inorganic pigment is preferred from the standpoint of the production workability, the coating workability, and the storage stability of the coating composition, and the antifouling capability and the damage resistance of the antifouling coating film, in which one or more kind selected from iron oxide, titanium oxide, carbon black, zinc oxide, aluminum silicate, alumina white, and barium sulfate is preferred, one or more kind selected from iron oxide, titanium oxide, and carbon black is more preferred, and one or more kind selected from iron oxide and titanium oxide is further preferred.

Examples of the iron oxide include red iron oxide, yellow iron oxide, and black iron oxide.

The titanium oxide used may be any of a rutile type, an anatase type, and a brookite type, and a rutile type is preferably used from the standpoint of the stability of the antifouling coating film and the antifouling coating composition, and the availability.

Examples of the organic pigment include naphthol red and phthalocyanine blue.

In the case where the coating composition contains the pigment (J), the content of the pigment (J) in the solid content of the coating composition is preferably 0.1% by mass or more, more preferably 1% by mass or more, and further preferably 5% by mass or more, and is preferably 20% by mass or less, more preferably 15% by mass or less, and further preferably 10% by mass or less, from the standpoint of the antifouling capability and the damage resistance of the antifouling coating film formed with the coating composition, and the production workability, the coating workability, and the storage stability of the antifouling coating composition.

On the other hand, in the case where the antifouling coating film of the present embodiment is applied to the purpose that requires transparency or light transmissibility, it is preferred that substantially no pigment (J) is contained, or the content of the pigment (J) in the solid content of the coating composition is kept up to 0.5% by mass.

### <Organic Solvent (K)>

The antifouling coating composition of the present embodiment may contain an organic solvent (K) for the purpose of reducing the viscosity of the coating composition for enhancing the coatability thereof.

Examples of the organic solvent (K) include an aromatic hydrocarbon based organic solvent, an aliphatic hydrocarbon based organic solvent, an alicyclic hydrocarbon based organic solvent, a ketone based organic solvent, and an ester based organic solvent, in which an aromatic hydrocarbon based organic solvent and a ketone based organic solvent are preferred.

Examples of the aromatic hydrocarbon based organic solvent include toluene, xylene, and mesitylene.

Examples of the aliphatic hydrocarbon based organic solvent include pentane, hexane, heptane, and octane.

Examples of the alicyclic hydrocarbon based organic solvent include cyclohexane, methylcyclohexane, and ethylcyclohexane.

Examples of the ketone based organic solvent include acetylacetone, acetone, methyl ethyl ketone, methyl isobutyl ketone, and dimethyl carbonate.

Examples of the ester based organic solvent include propylene glycol monomethyl ether acetate.

One kind of the organic solvents (K) may be used alone, or two or more kinds thereof may be used in combination.

In the case where the antifouling coating composition of the present embodiment contains the organic solvent (K), the content of the organic solvent (K) in the coating composition can be appropriately regulated depending on the viscosity of the coating composition, is preferably 1% by mass or more, more preferably 5% by mass or more, and further preferably 10% by mass or more, and from the standpoint of preventing the coating composition from sagging in coating, is preferably 70% by mass or less, more preferably 50% by mass or less, and further preferably 30% by mass or less.

### <Preferred Embodiments of Antifouling Coating Composition>

The antifouling coating composition may be a one-component type antifouling coating composition in which the ingredients are contained in one component, or a multi-component type antifouling coating composition in which the ingredients are contained in two or more components, which are mixed with each other before coating, in which the multi-component type antifouling coating composition is preferred from the standpoint of preventing the deterioration and the curing thereof in storing, and the one-component type antifouling coating composition is preferred from the standpoint of the coating workability.

Examples of the multi-component type antifouling coating composition include a two-component type antifouling coating composition and a multi-component type antifouling coating composition including three or more components, in which the two-component type antifouling coating composition is preferred from the standpoint of the coating workability, and the multi-component type antifouling coating composition including three or more components is preferred from the standpoint of preventing the deterioration and the curing thereof in storing.

In the multi-component type antifouling coating composition, the curable organopolysiloxane (A) is preferably contained in the different component from the silane coupling agent (D), the organosilicon crosslinking agent (H), and the curing catalyst (I), and the silane coupling agent (D) is preferably contained in the different component from the organosilicon crosslinking agent (H) and the curing catalyst (I).

The pigment (J), the inorganic filler (C), and the antifouling agent (G) are preferably contained in the same component as the curable organopolysiloxane (A).

In the multi-component type antifouling coating composition, the contents of the ingredients in the antifouling coating composition each are the content based on the total amount of all the components.

### <Production Method of Antifouling Coating Composition>

The antifouling coating composition is preferably produced in the following manner.

It is preferred to perform firstly a step of kneading the curable organopolysiloxane (A) and the inorganic filler (C), which may be heated during kneading or after kneading. In the case where these ingredients are kneaded in advance, the affinity between them can be enhanced, and thereby the aggregation of the inorganic filler (C) and the increase of the viscosity of the coating composition can be prevented.

The condition in heating is preferably 100°C or more, more preferably 100 to 300°C, and further preferably 140 to 200°C. The pressure therein is preferably ordinary pressure or reduced pressure, and the treatment time is preferably 3 to 30 hours.

The antifouling coating composition can be obtained by mixing and agitating the ingredients to be blended.

In the case where the antifouling coating composition is a one-component type antifouling coating composition, the coating composition can be obtained in such a manner that to the curable organopolysiloxane (A) and the glycerin condensate ester (B), which are the essential ingredients, the inorganic filler (C), the silane coupling agent (D), the silicone oil (E), the acrylic based polymer (F) having a hydrophilic group, the antifouling agent (G), the organosilicon crosslinking agent (H), the curing catalyst (I), the pigment (J), and the organic solvent (K), which are the optional ingredients, are appropriately added, and the ingredients are mixed and agitated.

In the case where the antifouling coating composition is a multi-component type antifouling coating composition, the curable organopolysiloxane (A) is preferably contained in the different component from the silane coupling agent (D), the organosilicon crosslinking agent (H), and the curing catalyst (I). In the case of the multi-component type antifouling coating composition including three or more compositions, the silane coupling agent (D) is preferably contained in the different component from the organosilicon crosslinking agent (H) and the curing catalyst (I).

The inorganic filler (C), the antifouling agent (G), and pigment (J) are preferably contained in the same component as the curable organopolysiloxane (A).

The glycerin condensate ester (B) may be any of the components, and in the case where the coating composition contains the curing catalyst (I), the glycerin condensate ester (B) is preferably contained in the component containing the curing catalyst (I).

The organic solvent (K) is preferably contained all the components.

The mixing and agitating is preferably performed at 0 to 50°C.

### [Antifouling Coating Film]

The antifouling coating film of the present embodiment is obtained by curing the antifouling coating composition of the present embodiment. Specifically, for example, the antifouling coating film can be obtained in such a manner that the antifouling coating composition of the present embodiment is coated on a substrate or the like, and then cured.

Examples of the method for coating the antifouling coating composition of the present embodiment include a known method with a brash or a roller, or through spraying.

The antifouling coating composition thus coated by the aforementioned method can be cured, for example, by allowing to stand under a condition of 25°C for approximately 0.5 to 3 days, and thus the coating film can be obtained.

The curing of the coating composition may be conducted under heating and air flow.

The thickness after curing of the antifouling coating film of the present embodiment is, for example, preferably approximately 100 to 2,000 µm from the standpoint of enhancing the coating film strength. Examples of the method for producing the antifouling coating film having the thickness above include a method of coating the coating composition once or multiple times to a thickness of 30 to 400 µm, more preferably 50 to 300 µm, per one coating.

The antifouling coating film of the present embodiment may have, on the surface of the coating film, for example, a surface fine structure, such as riblets, formed by bringing into contact with a template in forming the coating film according to the method described in WO 2019/189412.

### [Antifouling Sheet]

The antifouling sheet of the present embodiment includes the antifouling coating film of the present embodiment.

The antifouling sheet of the present embodiment may optionally include, in addition to the antifouling coating film, a substrate layer, a pressure-sensitive adhesive layer, an intermediate layer, a release layer, and the like.

The substrate layer has a function of enhancing the strength of the antifouling sheet, and any material that has the function can be used without limitation. Examples of the substrate layer include a coating film, a film, and a sheet constituted by a resin, such as a silicone resin, an acrylic resin, a polyolefin resin, a polyvinyl resin, a polyester resin, and a polyurethane resin, a metal, such as a stainless steel and aluminum, a material, such as paper, a nonwoven fabric, a woven fabric, and glass, and a composite material combining these materials, in which a substrate layer formed of a silicone resin and a combination thereof with another substrate layer are preferred since excellent adhesion can be obtained even in the case where the coating composition of the present invention is coated directly thereon. The substrate layer may have a barrier function of reducing the migration of water and other liquid matters, and examples thereof include the materials described as a water vapor barrier layer in JP 2015-224334 A.

The pressure-sensitive adhesive layer has a function of adhering the antifouling sheet to the substrate, and any material that has the function can be used without limitation. Examples of the adhesive forming the pressure-sensitive adhesive layer include an acrylic pressure-sensitive adhesive, a silicone pressure-sensitive adhesive, a natural or synthetic rubber based pressure-sensitive adhesive, and a polyurethane pressure-sensitive adhesive, and these adhesives may be used in combination. Among the above, an acrylic pressure-sensitive adhesive is preferred from the standpoint of the easiness in designing the adhesion force, and the excellent weather resistance and heat resistance thereof, and a silicone pressure-sensitive adhesive is also preferred since it can correspond to wide temperature range, and has the excellent water resistance and chemical resistance, and the excellent adhesiveness thereof to a silicone based underlayer. The antifouling sheet of the present invention may not have the pressure-sensitive adhesive layer, and may be adhered to the adherend, for example, by a method of coating an adhesive in adhering, followed by curing.

The intermediate layer has a function of binding the layers, and examples thereof include a silicone resin based tie coating.

The release layer has a function of temporarily protecting the antifouling coating film and the pressure-sensitive adhesive layer until adhering the antifouling sheet, and any material that has the function can be used without limitation. The release layer used can be, for example, a release liner including paper or a film coated or modified with a low surface energy compound, such as an organosilicone compound, a fluoropolymer, a fluorosilicone, a polyurethane, and a polyolefin. The release layer used may also be, for example, a material that can be easily removed by bringing into water, as described in WO 2020/105630.

Examples of the configuration of the antifouling sheet of the present invention include a sheet including the release layer, the pressure-sensitive adhesive layer, the substrate layer, the intermediate layer, the antifouling coating film, and the release layer, which are laminated in this order, a sheet including the release layer, the pressure-sensitive adhesive layer, the substrate layer, the antifouling coating film, and the release layer, which are laminated in this order, a sheet including the release layer, the pressure-sensitive adhesive layer, and the antifouling coating film, which are laminated in this order, a sheet including the release layer, the pressure-sensitive adhesive layer, the intermediate layer, and the antifouling coating film, which are laminated in this order, and a sheet including the substrate layer and the antifouling coating film, which are laminated in this order.

Examples of the production method of the antifouling sheet include a method in which the substrate layer is formed, on one surface thereof, the pressure-sensitive adhesive layer is formed, and then the release layer is adhered thereto, and on the other surface thereof, the intermediate layer is formed, on which the antifouling coating composition of the present embodiment is coated and cured, and also include a method in which the antifouling coating composition of the present embodiment is coated and cured on the substrate layer of a commercially available base tape including the release layer, the pressure-sensitive adhesive layer, and the substrate layer, which are laminated in this order.

The use of the antifouling sheet provides advantages that a volatile organic solvent can be prevented from effusing into the air in constraction, an antifouling coating film can be provided on a substrate having low adhesiveness without an additional process including primer coating, the original state can be easily restored when the antifouling becomes unnecessary, and the like.

Examples of the adhering procedure of the antifouling sheet to an adherend include a procedure including removing the release layer, and adhering the exposed pressure-sensitive adhesive layer to a substrate of the adherend, for the antifouling sheet including the release layer, the pressure-sensitive adhesive layer, the substrate layer, and the antifouling coating film, which are lamianted in this order. Furthermore, depending on necessity, a process in which the edge of the spread antifouling sheet and the surrounding surface of the adherend are sealed with a coating composition or press-adhered with another tape may be provided, and for an adherend having a cylindrical shape, the antifouling may be held by pressing with the antifouling sheet itself, for example, by winding the antifouling sheet spirally.

### [Substrate having Antifouling Coating Film and Method for producing Same]

The substrate having an antifouling coating film of the present embodiment includes a substrate having thereon the antifouling coating film or the antifouling sheet of the present embodiment.

The method for producing the substrate having an antifouling coating film of the present embodiment is not particularly limited, and may be a production method including a step (1) of coating or impregnating a substrate with the antifouling coating composition of the present embodiment, so as to provide a coated article or an impregnated article, and a step (2) of curing the coated article or the impregnated article.

The method for coating the coating composition on the substrate used in the step (1) can be the coating method described above. The method of impregnating is not particularly limited, and can be performed by immersing the substrate in the coating composition in an amount that is sufficient for the impregnation. The method for curing the coated article or the impregnated article is not particularly limited, and can be performed by curing in the similar method as in the method for producing the antifouling coating film.

The substrate having an antifouling coating film of the present embodiment can also be obtained by adhering the antifouling sheet described above to the substrate.

Examples of the substrate include a vessel (for example, a hull panel of a large steel ship, such as a container ship and a tanker, a fishing boat, an FRP boat, a wooden boat, a yacht, and the like, including a new vessel and a repaired vessel), a fishery material (for example, a rope, a fishing net, a fishing gear, a float, and a buoy), an underwater cable and a protective material therefor, an oil pipeline, a water conduit, a circulating water pipe, a diving wear, a hydroscope, an oxygen cylinder, a swimming wear, a torpedo, an underwater structure, such as a water supply and drainage pipe for thermal and nuclear power plants, an undersea cable, an equipment utilizing seawater (such as a seawater pump), an equipment used underwater or above water (such as a solar power generation panel, an observation window for measurement instruments and equipment, a camera lens, an underwater light, and an underwater sensor), a mega-float, a coastal road, an undersea tunnel, port facilities, and various marine civil engineering works in canals, waterways, and the like.

Among these, the substrate is preferably selected from the group consisting of a vessel, an underwater structure, and a fishery material, more preferably selected from the group consisting of a vessel and an underwater structure, and further preferably a vessel.

In the case where substantially no pigment (J) is contained, or the content of the pigment (J) in the solid content of the coating composition is 0.5% by mass or less, the substrate for the purpose that requires transparency or light transmissibility among the aforementioned applications, such as a swimming goggle, an observation window for measurement instruments and equipment, and a camera lens, can be used, and the configuration is preferred since the excellent antifouling capability can be imparted thereto while achieving the high transparency and light transmissibility.

Examples of the material of the substrate include a resin, for example, a silicone resin, an acrylic resin, a polyolefin resin, a polyvinyl resin, such as polyvinyl chloride, a (co)polymer of an unsaturated monomer, such as polystyrene, a polyester based resin, such as polyethylene terephthalate, polybutylene terephthalate, and polyethylene naphthalate, a polyurethane resin, an epoxy resin, polyacetal, polycarbonate, and acetyl cellulose; a metal, such as iron, aluminum, titanium, and a stainless steel; glass, paper, and cloth.

The substrate used may be in the form of an underwater antifouling tube having the antifouling coating film of the present embodiment as the outermost layer. Examples of the antifouling tube include the embodiment described in JP 2021-028166 A, and for example, the underwater antifouling tube can be obtained by coating and curing the antifouling coating composition of the present invention on the outer surface of a tube formed of silicone rubber. The antifouling tube can be used for preventing an underwater cable from being damaged by fouling, and for example, an underwater cable can be prevented from being damaged by fouling in such a manner that the underwater antifouling tube is cut in the longitudinal direction and wound on the underwater cable to be protected, and the cut line is bonded with the antifouling coating composition of the present invention, or the underwater antifouling tube is bound with a banding band having been subjected to an appropriate antifouling treatment, so as to cover the periphery thereof.

### [Antifouling Method]

The antifouling method of the present embodiment includes using the antifouling coating film of the present embodiment.

The antifouling coating film obtained by curing the antifouling coating composition of the present embodiment is excellent in antifouling capability, and the substrate covered with the antifouling coating film can be prevented from being damaged by fouling due to aquatic organisms.

### Examples

The present invention will be described more specifically with reference to examples, but the present invention is not limited to the examples.

### [Ingredients of Antifouling Coating Composition]

The ingredients used in coating compositions are shown in Tables 1 to 3. The values of viscosity shown in Table 1 each are a value at 25°C.

**Table 1**

| | | Compound name | Chemical formula, properties, manufacturer, etc. |
|---|---|---|---|
| (A) | Curable organopolysiloxane | Silanol group-containing organopolysiloxane | HO-[Si(CH₃)₂-O-]ₙ-H |
| | | | weight average molecular weight: 28,500 viscosity: 2,100 mPa·s |
| | | Oximesilyl group-containing organopolysiloxane | (MEKO)₂(CH₂=CH-)SiO-[Si(CH₃)₂-O-]ₙ-Si(CH=CH₂)(MEKO)₂ |
| | | | weight average molecular weight: 35,000 viscosity: 1,500 mPa·s |
| (C) | Inorganic filler | Untreated silica | AEROSIL 200, available from Nippon Aerosil Co., Ltd. |
| | | Hydrophobized silica | AEROSIL RX200, available from Nippon Aerosil Co., Ltd. |
| Kneaded material (1) of (A) and (C) | | kneaded material of silanol group-containing organopolysiloxane and hydrophobized silica | |
| | | amount of ingredient (C) per 100 parts by mass of ingredient (A): 10 parts by mass, viscosity: 5,000 mPa·s | |
| Kneaded material (2) of (A) and (C) | | kneaded material of oximesilyl group-containing organopolysiloxane and untreated silica | |
| | | amount of ingredient (C) per 100 parts by mass of ingredient (A): 10 parts by mass, viscosity: 40 mPa·s | |
| Kneaded material (3) of (A) and (C) | | kneaded material of oximesilyl group-containing organopolysiloxane and hydrophobized silica | |
| | | amount of ingredient (C) per 100 parts by mass of ingredient (A): 10 parts by mass, viscosity: 800 mPa·s | |

**Table 2**

| | n | R | | | Product name | Manufacturer |
|---|---|---|---|---|---|---|
| | | Functional group | Number | Number of H | | |
| B-1 | 2 | isostearoyl | 2 | 2 | EMALEX DISG-2 | *1 |
| B-2 | 3 | isostearoyl | 2 | 3 | EMALEX DISG-3 | |
| B-3 | 6 | isostearoyl | 2 | 6 | EMALEX DISG-6 | |
| B-4 | 2 | isostearoyl | 3 | 1 | EMALEX TISG-2 | |
| B-5 | 10 | isostearoyl | 3 | 9 | EMALEX TISG-10 | |
| B-6 | 10 | isostearoyl | 5 | 7 | DECAGLYN 5-ISV | *2 |
| B-7 | 10 | isostearoyl | 10 | 2 | DECAGLYN 10-ISV | |
| B'-1 | 1 | isostearoyl | 2 | 1 | SUNOIL GDI-D | *3 |
| B'-2 | 1 | isostearoyl | 3 | 0 | SUNOIL GTI-D | |

| | | | | | | |
|---|---|---|---|---|---|---|
| *1: Nihon Emulsion Co., Ltd. *2: Nikko Chemicals Co., Ltd. *3: Taiyo Kagaku Co., Ltd. | | | | | | |

**Table 3**

| | | Compound name | Chemical formula, properties, manufacturer, etc. |
|---|---|---|---|
| (D) | Silane coupling agent | 3-(2-aminoethyl) aminopropyltrimethoxysilane | KBM-603, available from Shin-Etsu Chemical Co., Ltd. |
| (E) | Silicone oil | phenyl-modified polydimethylsiloxane | KF-50-1,000cs, available from Shin-Etsu Chemical Co., Ltd. |
| | | | phenyl modification rate: 5%, viscosity: 1,000 mPa·s |
| | | ether-modified polydimethylsiloxane | KF-6020, available from Shin-Etsu Chemical Co., Ltd. |
| | | | viscosity: 180 mPa·s |
| (G) | Antifouling agent | copper pyrithione | Copper Omadine Powder, available from Arch UK Biocides, Ltd. |
| | | | Cu(-S-C₅H₄N-O-)₂ |
| (H) | Organosilicon crosslinking agent | organosilane partial hydrolysis condensate | WACKER SILICATE TES 40 WN, available from Wacker Asahikasei Silicone Co., Ltd. |
| | | | H5C2O-[Si(OC2H5)2-O-]t-C2H5 |
| | | vinyltris(methylethylketoxime)silane | BCA-100, available from Shin-Etsu Chemical Co., Ltd. |
| (I) | Curing catalyst | carboxylic acid metal salt | K-KAT XK-618, available from King Industries, Inc. |
| (J) | Pigment | titanium oxide | TITONE R-5N, available from Sakai Chemical Industry Co., Ltd. |
| | | red iron oxide | TODA COLOR KN-V, available from Toda Kogyo Corporation |
| (K) | Organic solvent | xylene | - |

### <Acrylic based Polymer (F) having Hydrophilic Group>

### Synthesis Example 1

### (Synthesis of Polymer (F-1))

The reaction was performed under ordinary pressure and a nitrogen atmosphere. In a reaction vessel equipped with an agitator, a reflux condenser, a thermometer, a nitrogen introducing tube, and a dropping funnel, 42.86 parts by mass of methyl amyl ketone was charged, and heated under agitation until methyl amyl ketone reached 100°C. While retaining the temperature of the reaction mixture to 100±5°C, a mixture of 40.0 parts by mass of NK ESTER AM-90G (methoxypolyethylene glycol acrylate, average number of polyethylene glycol units: 9, available from Shin-Nakamura Chemical Co., Ltd.), 60.0 parts by mass of isobutyl acrylate, and 4.0 parts by mass of 2,2'-azobis(2-methylbutyronitrile) was added to the reaction vessel in a dropwise manner over 4 hours. Thereafter, the reaction mixture was agitated for 2 hours while retaining to 100±5°C, resulting in a solution of a polymer (F-1). The solid content of the resulting solution was 70.3% by mass, and the viscosity thereof was 109 mPa·s. The weight average molecular weight (Mw) of the polymer (F-1) was 9,100.

### (Solid Content of Polymer Solution)

The polymer solution was dried at 108°C and 1 atm for 3 hours to provide a solid matter, and the mass of the solid matter was divided by the mass of the polymer solution before drying, so as to provide the solid content (% by mass).

### (Viscosity of Polymer Solution)

The viscosity (mPa·s) of the polymer solution at a liquid temperature of 25°C was measured with an E-type viscometer (TV-25, available from Toki Sangyo Co., Ltd.).

### [Average Molecular Weight of Polymer)

The weight average molecular weight (Mw) of the polymer was measured by gel permeation chromatograph (GPC) under the following condition.

### (GPC Condition)

Device: "HLC-8220GPC" (available from Tosoh Corporation)
Columns: "TSKgel Super H2000" and "TSKgel Super H4000" (both available from Tosoh Corporation, 6 mm (inner diameter) × 15 cm (length) connected
Eluent: tetrahydrofuran (THF)
Flow rate: 0.500 mL/min
Detector: RI
Temperature of column thermostat chamber: 40°C
Standard substance: polystyrene
Preparation method of specimen: THF was added to the polymer solution, and then filtered with a membrane filter to provide a specimen for the GPC measurement.

### [Production of Antifouling Coating Composition]

### Examples 1 to 12, 14, and 15 and Comparative Examples 1 to 4

The ingredients were mixed and agitated according to the blending amounts (part by mass) shown in Table 4, and thereby a two-component type coating composition including a base component and a curing agent component was prepared. The polymer (F-1) was blended in the form of a polymer solution in an amount shown in Table 4. The two-component type coating composition was coated after sufficiently mixing and agitating the ingredients of the components with a disperser until uniform.

### Example 13

The ingredients were mixed and agitated according to the blending amounts (part by mass) shown in Table 4, and thereby a three-component type coating composition including a base component, a curing agent component, and an additive component was prepared. The three-component type coating composition was coated after sufficiently mixing and agitating the ingredients of the components with a disperser until uniform.

### [Examples 16 to 19 and Comparative Example 5]

The ingredients were mixed and agitated according to the blending amounts (part by mass) shown in Table 5, and thereby a one-component type coating composition was prepared. The one-component type coating composition was coated after sufficiently mixing and agitating with a disperser until uniform.

### <Production of Test Plate having Coating Film>

A test plate having a coating film was produced in the following manner by using each of the coating compositions obtained above.

On a sand-blasted steel plate (100 mm in length × 70 mm in width × 2.3 mm in thickness), an epoxy based anticorrosion coating composition ("BANNOH 500", available from Chugoku Marine Paints, Ltd.) was coated to make a thickness after drying (curing) of approximately 100 µm, and dried at ordinary temperature (23°C) for 24 hours to form an underlayer coating film. Thereafter, an intermediate coating composition ("CMP BIOCLEAN TIE COAT ", available from Chugoku Marine Paints, Ltd.) was coated to make a thickness after drying (curing) of 100 µm, and dried at ordinary temperature for 24 hours to form an intermediate coating film. Subsequently, on the intermediate coating film, the coating compositions of Examples 1 to 19 and Comparative Examples 1 to 5 each were coated at ordinary temperature to make a thickness after drying (curing) of 200 µm, and dried at ordinary temperature for one week to provide a test plate having a coating film.

### <Evaluation of Static Antifouling Capability>

The test plate was immersed in ocean (Hiroshima Bay, Seto Island Sea) at a depth of 1 m from the sea surface, and after 6 months, the ratio of the area having marine organisms adhered thereto (adhesion area) with respect to the total area of the antifouling coating film of the test plate set as 100% was measured through visual observation, and then evaluated for the static antifouling capability according to the following standard. The evaluation results are shown in Tables 4 and 5 below.

### (Standard for Antifouling Capability)

5: Adhered area of marine organisms of less than 10% based on total test area
4: Adhered area of marine organisms of 10% or more and less than 30% based on total test area
3: Adhered area of marine organisms of 30% or more and less than 50% based on total test area
2: Adhered area of marine organisms of 50% or more and less than 80% based on total test area
1: Adhered area of marine organisms of 80% or more based on total test area

### <Evaluation of Dynamic Antifouling Capability>

The test plate was mounted on a seawater rotor tester disposed off the coast of Kure City, Hiroshima Prefecture, and rotated at a rate providing a circumferential velocity of approximately 15 knot. The test plate was disposed in such a manner that the test surface was sufficiently exposed to sunlight, which was the condition likely causing slime. After 6 months, the ratio of the area having slime adhered thereto (adhesion area) with respect to the total area of the antifouling coating film of the test plate set as 100% was measured through visual observation, and then evaluated for the dynamic antifouling capability according to the following standard. The evaluation results are shown in Tables 4 and 5 below.

### (Evaluation Point)

5: No slime adhered
4: Adhered area of slime of 20% or more and less than 40% based on the total test area
3: Adhered area of slime of 40% or more and less than 60% based on the total test area
2: Adhered area of slime of 60% or more and less than 80% based on the total test area
1: Adhered area of slime of 80% or more based on the total test area

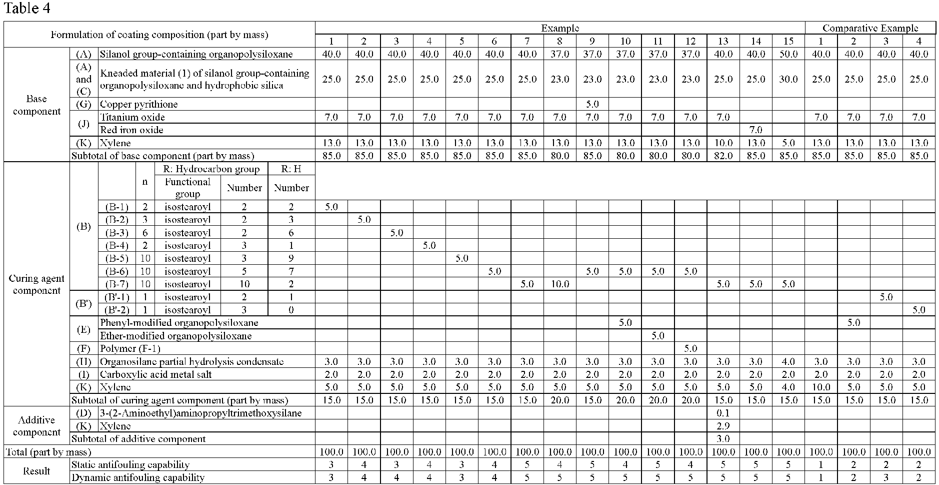

**Table 5**

| Formulation of coating composition (part by mass) | | | | | | Example | | | | Comparative Example |
|---|---|---|---|---|---|---|---|---|---|---|
| | | | | | | 16 | 17 | 18 | 19 | 5 |
| (A) and (C) | Kneaded material of oximesilyl group containing polyorganosiloxane and untreated silica | | | | | 42.0 | 42.0 | 42.0 | 42.0 | 42.0 |
| | Kneaded material of oximesilyl group containing polyorganosiloxane and hydrophobic silica | | | | | 18.0 | 18.0 | 18.0 | 18.0 | 18.0 |
| (B) | | n | R: Hydrocarbon group | | R: H | | | | | |
| | | | Functional group | Number | Number | | | | | |
| | (B-1) | 2 | isostearoyl | 2 | 2 | 5.0 | | | | |
| | (B-4) | 2 | isostearoyl | 3 | 1 | | 5.0 | | | |
| | (B-6) | 10 | isostearoyl | 5 | 7 | | | 5.0 | | |
| | (B-7) | 10 | isostearoyl | 10 | 2 | | | | 5.0 | |
| (D) | 3-(2-Aminoethyl)aminopropyltrimethoxysilane | | | | | 0.1 | 0.1 | 0.1 | 0.1 | 0.1 |
| (H) | Organosilane partial hydrolysis condensate | | | | | 3.0 | 3.0 | 3.0 | 3.0 | 3.0 |
| (J) | Titanium oxide | | | | | 8.0 | 8.0 | 8.0 | 8.0 | 8.0 |
| (K) | Xylene | | | | | 23.9 | 23.9 | 23.9 | 23.9 | 28.9 |
| Total (part by mass) | | | | | | 100.0 | 100.0 | 100.0 | 100.0 | 100.0 |
| Result | Static antifouling capability | | | | | 3 | 3 | 5 | 4 | 1 |
| | Dynamic antifouling capability | | | | | 3 | 3 | 5 | 5 | 1 |

### <Production of Antifouling Sheet and Substrate having Antifouling Sheet, and Evaluation Thereof>

"SILICONE RUBBER ADHESIVE TAPE No. 9013", available from Teraoka Seisakusho Co., Ltd. (having a laminated structure of an acrylic based adhesive, a polyester film, and silicone rubber, total thickness: 0.1 mm, adhesive force: 19 N/25 mm in width) was cut into 6 cm × 12 cm, and on the surface thereof having the acrylic based adhesive, the release surface of the release film ("SP-PET-O1-50-BU", available from Mitsui Chemicals Tohcello, Inc. a silicone-treated PET film, thickness: 50 µm) was adhered. Thereafter, on the surface thereof having the silicone rubber, the coating composition of Example 7 was coated to be a thickness after drying (curing) of 200 µm, and dried at ordinary temperature for one week, resulting in an antifouling sheet. The antifouling sheet was an antifouling tape including the release film as the release layer, the acrylic based adhesive as the pressure-sensitive adhesive layer, the polyester film and the silicone rubber as the substrate layer, and the antifouling coating film formed of the antifouling coating composition of Example 7, in this order. The antifouling tape thus produced, from which the release film had been removed, was adhered to the center part of a polyvinyl chloride plate of 7 cm × 15 cm having a thickness of 2 mm, resulting in a test plate having the antifouling sheet. The test plate was immersed in actual seawater. After 3 months from the start of immersion, the test plate was observed. As a result, the part where the polyvinyl chloride plate was exposed with no antifouling sheet adhered was contaminated due to the adhesion of algae, whereas the antifouling sheet had no adhesion thereto, underwent no appearance failure, such as peel-off and cracks, and continued to follow the deformation of the substrate. The present invention can provide an antifouling tape that can conveniently impart an antifouling capability to various substrates including various plastics.

As apparent from Examples and Comparative Examples, an antifouling coating film excellent in antifouling capability can be formed with the coating composition of the present invention.

## Claims

1. An antifouling coating composition comprising a curable organopolysiloxane (A) and a glycerin condensate ester (B) represented by the following formula (1): 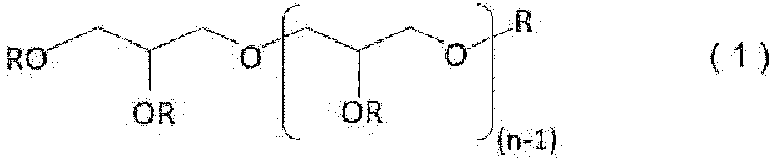 wherein n represents an integer of 2 or more and 20 or less, and R each independently represent a hydrogen atom or R¹C(=O)-, provided that at least one of R represents R¹C(=O)-, wherein R¹ represents a monovalent hydrocarbon group having 7 or more and 23 or less carbon atoms.

2. The antifouling coating composition according to claim 1, wherein R¹ includes a branched hydrocarbon group.

3. The antifouling coating composition according to claim 1, wherein R includes an isostearoyl group.

4. The antifouling coating composition according to claim 1, wherein at least one of R represents a hydrogen atom.

5. The antifouling coating composition according to claim 1, wherein the antifouling coating composition has a content of the glycerin condensate ester (B) in a solid content thereof of 1% by mass or more and 20% by mass or less.

6. The antifouling coating composition according to claim 1, wherein the curable organopolysiloxane (A) is a compound represented by the following formula (A1): 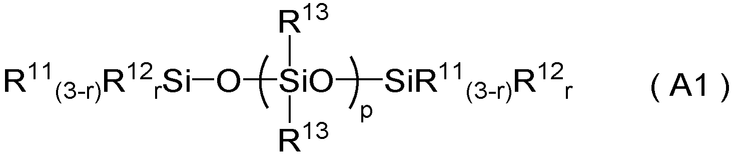 wherein R¹¹ and R¹³ each independently represent a hydrogen atom, or any of an alkyl group, an alkenyl group, an aryl group, an aralkyl group, and a halogenated alkyl group, each having 1 to 16 carbon atoms, R¹² each independently represent a hydroxy group or a hydrolyzable group, r represents an integer of 1 to 3, and p represents a number of 10 to 10,000.

7. The antifouling coating composition according to claim 1, wherein the antifouling coating composition has a content of the curable organopolysiloxane (A) in a solid content thereof of 50% by mass or more and 99% by mass or less.

8. The antifouling coating composition according to claim 1, further comprising an inorganic filler (C).

9. The antifouling coating composition according to claim 8, wherein the inorganic filler (C) is silica, and the silica is blended in the form of a kneaded material with the curable organopolysiloxane (A).

10. The antifouling coating composition according to claim 1, wherein the antifouling coating composition further comprises a silane coupling agent (D).

11. The antifouling coating composition according to claim 1, wherein the antifouling coating composition further comprises one or more kind selected from the group consisting of a silicone oil (E) and an acrylic based polymer (F) having a hydrophilic group.

12. An antifouling coating film comprising the antifouling coating composition according to any one of claims 1 to 11 having been cured.

13. An antifouling sheet comprising the antifouling coating film according to claim 12.

14. A substrate having an antifouling coating film, comprising a substrate having thereon the antifouling coating film according to claim 12.

15. The substrate having an antifouling coating film according to claim 14, wherein the substrate is selected from a vessel, an underwater structure, and a fishery material.

16. A method for producing a substrate having an antifouling coating film, comprising a step (1) of coating or impregnating a substrate with the antifouling coating composition according to any one of claims 1 to 11, so as to provide a coated article or an impregnated article, and a step (2) of curing the coated article or the impregnated article.

17. An antifouling method comprising using the antifouling coating film according to claim 12.
